# EUROPEAN PATENT APPLICATION

(11) **EP 4 503 730 A1**
(43) Date of publication of application: **05.02.2025**
(21) Application number: 23778266.9
(22) Date of filing: 29.03.2023
(51) Int. Cl.: H04W 28/22

(54) **RESOURCE PROCESSING METHOD AND DEVICE, AND TERMINAL**

(30) Priority: 30.03.2022 CN 202210329050
(71) Applicant: VIVO MOBILE COMMUNICATION CO., LTD., Dongguan, Guangdong 523863 (CN)
(72) Inventor: WANG, Lihui, Dongguan, Guangdong 523863 (CN); WU, Kai, Dongguan, Guangdong 523863 (CN)
(74) Representative: Conti, Marco
(86) International application number: PCT/CN2023/084579
(87) International publication number: WO 2023/185901

(57) **Abstract**

The present application discloses a resource processing method and device, and a terminal. The method comprises: under the condition that a first BWP comprises a first SSB, a terminal executing a first operation, the first SSB comprising a non-cell defining SSB, and the first operation comprising at least one of the following: determining that a first transmission resource which is not expected to be allocated to the terminal overlaps a transmission resource corresponding to the first SSB, or determining that the first SSB is not sent in the first transmission resource allocated to the terminal; under the condition that the first transmission resource overlaps a transmission resource corresponding to the non-cell defining SSB, determining that the transmission resource corresponding to the non-cell defining SSB is not used for sending or reception of first information; and under the condition that the first transmission resource overlaps a resource indicated in a first rate matching mode, determining that the resource indicated in the first rate matching mode is not used for sending or reception of the first information, the resource indicated in the first rate matching mode comprising the transmission resource corresponding to the non-cell defining SSB.

## Description

### CROSS-REFERENCE TO RELATED APPLICATIONS

This application claims priority to Chinese Patent Application No. 202210329050.9, filed in China on March 30, 2022, which is incorporated herein by reference in its entirety.

### TECHNICAL FIELD

This application pertains to the field of communication technologies, and specifically relates to a resource processing method and apparatus, and a terminal.

### BACKGROUND

Non-cell defining (Non Cell Defining, NCD) synchronization signal/physical broadcast channel signal blocks (Synchronization Signal and PBCH block, SSB) are introduced in related arts. From the perspective of terminals, in a case that a current active/active (active) bandwidth part (Bandwidth Part, BWP) does not include a cell defining SSB (Cell Defining SSB, CD-SSB), mandatory CD-SSB based functions that existing terminals must support, such as radio link monitoring (Radio Link Monitoring, RLM), beam failure detection (Beam Failure Detection, BFD), or radio resource management (Radio Resource Management, RRM) can be implemented based on NCD-SSB. However, it is not yet specified how to map other transmission resources (for example, data signal transmission resources, and control signal transmission resources) based on NCD-SSB, that is, it is not yet specified how to perform rate matching (rate matching) for transmission resources based on NCD-SSB.

### SUMMARY

Embodiments of this application provide a resource processing method and apparatus, and a terminal, so as to solve the problem of how to perform rate matching for transmission resources based on NCD-SSB.

According to a first aspect, a resource processing method is provided, including:
in a case that a first bandwidth part BWP includes a first synchronization signal/physical broadcast channel signal block SSB, performing, by a terminal, a first operation, where the first SSB includes a non-cell defining SSB; where
the first operation includes at least one of the following:
   determining that a first transmission resource allocated to the terminal is expected not to overlap with a transmission resource corresponding to the first SSB, or determining that the first SSB is not transmitted in a first transmission resource allocated to the terminal, where the first transmission resource is a resource for transmission of first information, and the first information includes at least one of a data signal, a control signal, and a reference signal;
   in a case that the first transmission resource overlaps with a transmission resource corresponding to a non-cell defining SSB, determining that the transmission resource corresponding to the non-cell defining SSB is not used for transmitting or receiving the first information; and
   in a case that the first transmission resource overlaps with a resource indicated by a first rate matching pattern, determining that the resource indicated by the first rate matching pattern is not used for transmitting or receiving the first information, where the resource indicated by the first rate matching module includes a transmission resource corresponding to a non-cell defining SSB.

According to a second aspect, a resource processing apparatus is provided, including:
a first processing module, configured to: in a case that a first bandwidth part BWP includes a first synchronization signal/physical broadcast channel signal block SSB, perform a first operation, where the first SSB includes a non-cell defining SSB; where
the first operation includes at least one of the following:
   determining that a first transmission resource allocated to the terminal is expected not to overlap with a transmission resource corresponding to the first SSB, or determining that the first SSB is not transmitted in a first transmission resource allocated to the terminal, where the first transmission resource is a resource for transmission of first information, and the first information includes at least one of a data signal, a control signal, and a reference signal;
   in a case that the first transmission resource overlaps with a transmission resource corresponding to a non-cell defining SSB, determining that the transmission resource corresponding to the non-cell defining SSB is not used for transmitting or receiving the first information; and
   in a case that the first transmission resource overlaps with a resource indicated by a first rate matching pattern, determining that the resource indicated by the first rate matching pattern is not used for transmitting or receiving the first information, where the resource indicated by the first rate matching module includes a transmission resource corresponding to a non-cell defining SSB.

According to a third aspect, a terminal is provided. The terminal includes a processor and a memory. The memory stores a program or instruction executable on the processor. When the program or instruction is executed by the processor, the steps of the method according to the first aspect are implemented.

According to a fourth aspect, a terminal is provided, including a processor and a communication interface. The processor is configured to: in a case that a first bandwidth part BWP includes a first synchronization signal/physical broadcast channel signal block SSB, perform a first operation, where the first SSB includes a non-cell defining SSB; where
the first operation includes at least one of the following:
determining that a first transmission resource allocated to the terminal is expected not to overlap with a transmission resource corresponding to the first SSB, or determining that the first SSB is not transmitted in a first transmission resource allocated to the terminal, where the first transmission resource is a resource for transmission of first information, and the first information includes at least one of a data signal, a control signal, and a reference signal;
in a case that the first transmission resource overlaps with a transmission resource corresponding to a non-cell defining SSB, determining that the transmission resource corresponding to the non-cell defining SSB is not used for transmitting or receiving the first information; and
in a case that the first transmission resource overlaps with a resource indicated by a first rate matching pattern, determining that the resource indicated by the first rate matching pattern is not used for transmitting or receiving the first information, where the resource indicated by the first rate matching module includes a transmission resource corresponding to a non-cell defining SSB.

According to a fifth aspect, a readable storage medium is provided, where the readable storage medium stores a program or instruction, and when the program or the instruction is executed by a processor, the steps of the method according to the first aspect are implemented.

According to a sixth aspect, a chip is provided. The chip includes a processor and a communication interface. The communication interface is coupled to the processor, and the processor is configured to run a program or instruction to implement the method according to the first aspect.

According to a seventh aspect, a computer program/program product is provided. The computer program/program product is stored in a storage medium. The computer program/program product is executed by at least one processor to implement the steps of the method according to the first aspect.

According to an eighth aspect, an embodiment of this application provides an electronic device, where the electronic device is configured to implement the steps of the method according to the first aspect.

In the embodiments of this application, in a case that the first bandwidth part BWP includes the non-cell defining SSB, the terminal performs the first operation, where the first operation includes at least one of the following: determining that the first transmission resource allocated to the terminal is expected not to overlap with the transmission resource corresponding to the non-cell defining SSB; in a case that the first transmission resource overlaps with the transmission resource corresponding to the non-cell defining SSB, determining that the transmission resource corresponding to the non-cell defining SSB is not used for transmitting or receiving the first information; and in a case that the first transmission resource overlaps with the resource indicated by the first rate matching pattern, determining that the resource indicated by the first rate matching pattern is not used for transmitting or receiving the first information, where the resource indicated by the first rate matching module includes the transmission resource corresponding to the non-cell defining SSB. In this way, performing the first operation achieves the objective of performing rate matching for the first transmission resource based on the non-cell defining SSB, thereby effectively ensuring the scheduling of the first information by the network.

### BRIEF DESCRIPTION OF DRAWINGS

FIG. 1 is a structural diagram of a communication system to which the embodiments of this application can be applied;
FIG. 2 is a schematic flowchart of a resource processing method according to an embodiment of this application;
FIG. 3 is a schematic diagram illustrating the relationship between BWPs allocated to a terminal according to an embodiment of this application;
FIG. 4 is a modular diagram of a resource processing apparatus according to an embodiment of this application;
FIG. 5 is a structural block diagram of a communication device according to an embodiment of this application; and
FIG. 6 is a structural block diagram of a terminal according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application fall within the protection scope of this application.

The terms "first", "second", and the like in this specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates that the associated objects have an "or" relationship.

It should be noted that technologies described in the embodiments of this application are not limited to a long term evolution (Long Term Evolution, LTE) or LTE-Advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other applications than an NR system application, for example, the 6^{th} generation (6^{th} Generation, 6G) communication system.

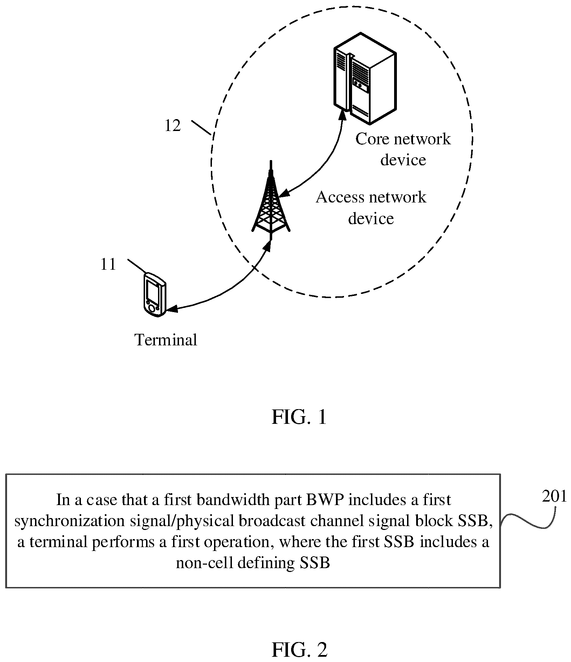

FIG. 1 is a block diagram of a wireless communication system to which the embodiments of this application can be applied. The wireless communication system includes a terminal 11 and a network-side device 12. The terminal 11 may be a terminalside device, such as a mobile phone, a tablet personal computer (Tablet Personal Computer), a laptop computer (Laptop Computer,) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), or pedestrian user equipment (Pedestrian User Equipment, PUE), a smart appliance (a home appliance with a wireless communication function, for example, a refrigerator, a television, a washing machine, or furniture), a game console, a personal computer (personal computer, PC), a teller machine, or a self-service machine. The wearable device includes a smart watch, a smart band, a smart earphone, smart glasses, smart jewelry (a smart bangle, a smart bracelet, a smart ring, a smart necklace, a smart ankle bangle, a smart anklet, or the like), a smart wristband, smart clothing, or the like. It should be noted that the terminal 11 is not limited to a specific type in the embodiments of this application. The network-side device 12 can include an access network device or core network device, where the access network device can also be referred to as a radio access network device, radio access network (Radio Access Network, RAN), radio access network function, or radio access network unit. The access network device can include base stations, wireless local area network (Wireless Local Area Networks, WLAN) access points, Wi-Fi nodes, or the like. The base station can be referred to as Node B, evolved Node B (eNB), access point, base transceiver station (Base Transceiver Station, BTS), radio base station, radio transceiver, basic service set (Basic Service Set, BSS), extended service set (Extended Service Set, ESS), home Node B, home evolved Node B, transmitting receiving point (Transmitting Receiving Point, TRP), or other appropriate terms in the field. As long as the same technical effects are achieved, the base station is not limited to any specific technical terminology. It should be noted that in the embodiments of this application, only the base station in the NR system is introduced as an example, and the specific type of the base station is not limited. The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF) unit, an edge application server discovery function (Edge Application Server Discovery Function, EASDF), unified data management (Unified Data Management, UDM), a unified data repository (Unified Data Repository, UDR), a home subscriber server (Home Subscriber Server, HSS), centralized network configuration (Centralized network configuration, CNC), a network repository function (Network Repository Function, NRF), a network exposure function (Network Exposure Function, NEF), a local NEF (local NEF or L-NEF), a binding support function (Binding Support Function, BSF), an application function (Application Function, AF), and the like. It should be noted that only a core network device in an NR system is used as an example in the embodiments of this application and the core network device is not limited to a specific type.

The following describes in detail the resource processing method provided in the embodiments of this application by using some embodiments and application scenarios thereof with reference to the accompanying drawings.

As shown in FIG. 2, an embodiment of this application provides a resource processing method including the following step.

Step 201: In a case that a first bandwidth part BWP includes a first synchronization signal/physical broadcast channel signal block SSB, a terminal performs a first operation, where the first SSB includes a non-cell defining SSB.

The first operation includes at least one of the following:
option 1: determining that a first transmission resource allocated to the terminal is expected not to overlap with a transmission resource corresponding to the first SSB, or determining that the first SSB is not transmitted in a first transmission resource allocated to the terminal, where the first transmission resource is a resource for transmission of first information, and the first information includes at least one of a data signal, a control signal, and a reference signal;
option 2: in a case that the first transmission resource overlaps with a transmission resource corresponding to a non-cell defining SSB, determining that the transmission resource corresponding to the non-cell defining SSB is not used for transmitting or receiving the first information; and
option 3: in a case that the first transmission resource overlaps with a resource indicated by a first rate matching pattern, determining that the resource indicated by the first rate matching pattern is not used for transmitting or receiving the first information, where the resource indicated by the first rate matching module includes a transmission resource corresponding to a non-cell defining SSB.

Specifically, for option 1, the terminal does not expect the first transmission resource allocated to the terminal to overlap with a physical resource block (Physical Resource Block, PRB) containing the transmission resource corresponding to the first SSB, or the terminal determines that the first SSB is not transmitted in a resource element (Resource Element, RE) of the first transmission resource allocated to the terminal.

In this embodiment of this application, the terminal does not expect that the first transmission resource allocated to the terminal overlaps with a PRB containing the transmission resource corresponding to the first SSB, or the terminal considers that the first SSB is not transmitted in an RE of the first transmission resource allocated to the terminal can be understood as follows: the first transmission resource allocated to the terminal by a base station cannot overlap with the PRB containing the transmission resource corresponding to the first SSB.

For option 2, when the first transmission resource allocated to the terminal overlaps with the PRB containing the transmission resource corresponding to the first SSB, the terminal determines that the PRB resource containing the first SSB cannot be used for reception or transmission of the first information.

For option 3, a network configures the first rate matching pattern (Rate Match Pattern) for the terminal. In a case that the first transmission resource allocated to the terminal overlaps with the resource indicated by the first rate matching pattern, the terminal determines that an RE corresponding to the resource indicated by the first rate matching pattern cannot be used for transmitting or receiving the first information.

The rate matching pattern can be configured using a rate matching pattern (Rate Match Pattern) parameter or a new configuration parameter, such as an SSB rate matching pattern parameter (Rate Match Pattern-SSB). The SSB rate matching pattern parameter indicates information such as the time-frequency resource and period of the first SSB.

Optionally, a period indicated by the first rate matching pattern includes period information of the first SSB.

Optionally, in addition to the existing periods of 2 ms, 4 ms, 5 ms, 8 ms, 10 ms, 20 ms, and 40 ms, the period of the first SSB also includes 80 ms and 160 ms.

In addition, resource overlap in this embodiment of this application includes at least one of the following:
time domain resource overlap;
frequency domain resource overlap;
spatial domain or code domain resource overlap.

The terminal in this embodiment of this application can be a reduced capability terminal (Reduced Capability, RedCap device/UE, or terminal with reduced capability), or a traditional terminal, that is, a non-reduced capability terminal.

For example, for option 1, the terminal in this embodiment of this application can be a reduced capability terminal (first terminal) or a non-reduced capability terminal (second terminal). For option 2, the terminal in this embodiment of this application is the first terminal. For option 3, the terminal in this embodiment of this application is the second terminal.

In this embodiment of this application, "not used for transmitting or receiving the first information" includes at least one of the following:
performing rate matching processing on the first information;
puncturing the first information;
dropping reception or transmission of the first information;
delaying reception or transmission of the first information; where for example, if a first transmission resource in a current slot or sub-slot overlaps with the transmission resource corresponding to the non-cell defining SSB, the terminal delays transmission of the first information until it finds an earliest slot or sub-slot in subsequent slots or sub-slots so that the first transmission resource does not overlap with the transmission resource corresponding to the non-cell defining SSB, and then the terminal transmits the first information on a first transmission resource in the earliest slot or sub-slot; and
in a case that the first information is information corresponding to a physical uplink shared channel (Physical Uplink Shared Channel, PUSCH) transmission, dividing the PUSCH transmission into multiple actual PUSCH transmissions.

In this embodiment of this application, in a case that the first bandwidth part BWP includes the non-cell defining SSB, the terminal performs the first operation, where the first operation includes at least one of the following: determining that the first transmission resource allocated to the terminal is expected not to overlap with the transmission resource corresponding to the non-cell defining SSB; in a case that the first transmission resource overlaps with the transmission resource corresponding to the non-cell defining SSB, determining that the transmission resource corresponding to the non-cell defining SSB is not used for transmitting or receiving the first information; and in a case that the first transmission resource overlaps with the resource indicated by the first rate matching pattern, determining that the resource indicated by the first rate matching pattern is not used for transmitting or receiving the first information, where the resource indicated by the first rate matching module includes the transmission resource corresponding to the non-cell defining SSB. In this way, performing the first operation achieves the objective of performing rate matching for the first transmission resource based on the non-cell defining SSB, thereby effectively ensuring the scheduling of the first information by the network.

Optionally, the non-cell defining SSB includes at least one of the following:
SSB configured by terminal-dedicated signaling, for example, SSB configured by terminal dedicated RRC signal (UE-dedicated RRC signaling);
SSB configured by BWP downlink dedicated (BWP-Downlink Dedicated) signaling, where the SSB configured by BWP downlink dedicated signaling may include an SSB configured by an SSB position in burst (ssb-PositionsInBurst) parameter in the BWP downlink dedicated signaling;
SSB configured by a radio resource control RRC parameter (for example, Non Cell Defining SSB) related to non-cell defining SSB configuration; and
SSB not used to obtain a system information block (System Information Block, SIB) 1 of a current serving cell or an SSB not used to obtain an SIB1 corresponding to a PDCCH configuration of a current serving cell.

Optionally, after the determining that the transmission resource corresponding to the non-cell defining SSB is not used for transmitting or receiving the first information, the method further includes: performing, by the terminal, a second operation, where the second operation includes at least one of the following:
performing rate matching processing on the first information;
puncturing (puncturing) the first information;
dropping reception or transmission of the first information;
delaying reception or transmission of the first information;
in a case that the first information is information corresponding to a PUSCH transmission, dividing the PUSCH transmission into multiple actual PUSCH transmissions.

Herein, dividing the PUSCH transmission into multiple actual PUSCH transmissions can mean dividing a nominal PUSCH transmission into multiple actual PUSCH transmissions. That is, the actual PUSCH transmissions are PUSCH transmissions obtained after dividing the nominal PUSCH transmission, and the nominal PUSCH transmission can be understood as a PUSCH transmission configured or allocated by a network.

Optionally, the method of this embodiment of this application further includes:
obtaining a first parameter, where the first parameter is used to indicate the number of rate matching patterns supported after extension, a value of the first parameter being greater than a first value and less than or equal to a second value; where
the first value is the maximum number of rate matching patterns supported before extension, and the second value is agreed by a protocol or determined based on a capability of the terminal.

Optionally, the first parameter is obtained through protocol agreement or network configuration.

The first parameter can specifically be extended maxNrofRateMatchPatterns, and the first value can specifically be 4. Optionally, in a case that a serving cell corresponds to frequency range FR2, the value of the first parameter is 16.

Herein, with multiple rate matching patterns configured for the resource occupied by the first SSB, even in a case that a physical resource block (PRB) occupied by the first information overlaps with a resource indicated by configured semi-persistent rate matching pattern (Rate Match Pattern) (that is, overlaps with a PRB occupied by an NCD-SSB), rate matching is performed for the transmission resource corresponding to the first information by using the rate matching patterns, and the maximum number of rate matching patterns supported is increased, for example, from 4 to 16. In this way, for Case D and Case E in frequency range 2, resources indicated by 16 rate matching patterns can cover physical resource blocks occupied by 64 periodic SSBs. In addition, increasing the maximum number of rate matching patterns supported can ensure flexibility of a network in configuring a rate matching pattern.

Optionally, the first information includes at least one of the following:
a data signal transmitted in a physical downlink shared channel (Physical downlink shared channel, PDSCH);
a control signal transmitted in a physical downlink control channel PDCCH;
a data signal transmitted in a physical uplink shared channel PUSCH;
a control signal transmitted in a physical uplink control channel PUCCH; and
a sounding reference signal.

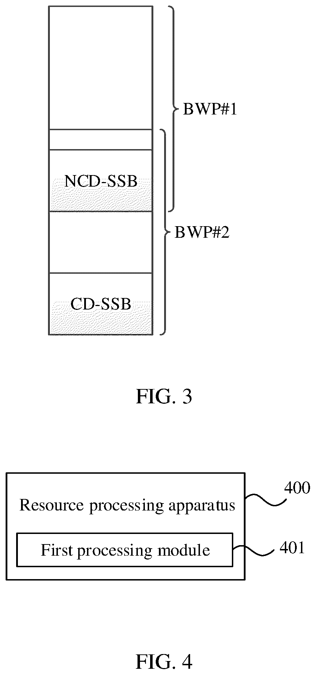

In an embodiment of this application, a current activated BWP of a first terminal (UE1) is BWP#1, with the first SSB (containing NCD-SSB) configured by a network for the first terminal, and a current activated BWP of a second terminal (UE2) is BWP#2, with only a CD-SSB on BWP#2 configured by a network for the second terminal. UE2 can only see the CD-SSB, but from the network perspective, BWP#2 actually contains both the CD-SSB and an NCD-SSB, as specifically shown in FIG. 3. For UE1, an NCD-SSB should replace the function of a CD-SSB. Therefore, in a case that a PRB of a PDSCH transmitted by a network to UE1 overlaps with a PRB of an NCD-SSB, UE1 considers this a network resource allocation error. Behavior of UE1 depends on implementation of UE1, or UE1 needs to perform rate matching for a PRB resource occupied by the PDSCH in the NCD-SSB.

For UE2, UE2 cannot perceive an NCD-SSB. Therefore, in a case that a PRB of a PDSCH transmitted by a network to UE2 overlaps with a PRB of an NCD-SSB, UE2 considers this a network resource allocation error. Behavior of UE2 depends on implementation of the UE, or the network configures a first rate matching pattern for UE2, where a resource indicated by the first rate matching pattern corresponds to an RE resource of the NCD-SSB. Therefore, for the PDSCH of UE2, rate matching is performed for the resource indicated by the first rate matching pattern.

In an embodiment of this application, in a case that a PDSCH scheduled by a system information radio network temporary identifier (System Information RNTI, SI-RNTI), where a system information indicator in downlink control information (Downlink Control Information, DCI) is set to 1, or in a case that a PDSCH scheduled by a random access RNTI (Random Access RNTI, RA-RNTI), MSGB-RNTI, paging RNTI (Paging RNTI, P-RNTI), or temporary cell radio network temporary identifier (Temporary Cell Radio Network Temporary Identifiers, TC-RNTI), the UE assumes an SS/PBCH block transmission based on ssb-PositionsInBurst and NonCellDefiningSSB (if the parameter is provided). If an allocated PDSCH resource overlaps with a PRB containing an SS/PBCH block transmission resource, the UE should assume that the PRB containing the SS/PBCH block transmission resource cannot be used for a PDSCH transmission in an OFDM symbol for transmitting an SS/PBCH block.

In a case that a PDSCH scheduled by a PDCCH has been received, CRC of the PDCCH is scrambled by a cell radio network temporary identifier (Cell RNTI, C-RNTI), modulation and coding scheme cell RNTI (Modulation and Coding Scheme Cell RNTI, MCS-C-RNTI), configured scheduling RNTI (Configured Scheduling RNTI, CS-RNTI), or a semi-persistent scheduling (Semi-Persistent Scheduling, SPS) PDSCH is received. Res corresponding to a resource configured or dynamically indicated in clauses 5.1.4.1 and 5.1.4.2 are not available for PDSCH transmission. Additionally, the UE assumes SS/PBCH block transmission according to ssb-PositionsInBurst and NonCellDefiningSSB (if the parameter is provided). If an allocated PDSCH resource overlaps with a PRB containing an SS/PBCH block transmission resource, the UE should assume that the PRB containing the SS/PBCH block transmission resource cannot be used for PDSCH transmission in an OFDM symbol for transmitting an SS/PBCH block.

If the PDSCH or SPS PDSCH scheduled by PDCCH overlaps with a PRB containing an SS/PBCH block transmission resource and configured by an NCD SSB, the UE should assume that the PRB containing the SS/PBCH block transmission resource cannot be used for PDSCH transmission in an OFDM symbol for transmitting an SS/PBCH block.

It should be noted that the resource processing method in this embodiment of this application is also applicable to Rel-18 flexible/full duplex (flexible/full duplex) and multiple TRP (multiple TRP) scenarios.

In this embodiment of this application, in a case that the first bandwidth part BWP includes the non-cell defining SSB, the terminal performs the first operation, where the first operation includes at least one of the following: determining that the first transmission resource allocated to the terminal is expected not to overlap with the transmission resource corresponding to the non-cell defining SSB; in a case that the first transmission resource overlaps with the transmission resource corresponding to the non-cell defining SSB, determining that the transmission resource corresponding to the non-cell defining SSB is not used for transmitting or receiving the first information; and in a case that the first transmission resource overlaps with the resource indicated by the first rate matching pattern, determining that the resource indicated by the first rate matching pattern is not used for transmitting or receiving the first information, where the resource indicated by the first rate matching module includes the transmission resource corresponding to the non-cell defining SSB. In this way, performing the first operation achieves the objective of performing rate matching for the first transmission resource based on the non-cell defining SSB, thereby effectively ensuring the scheduling of the first information by the network.

The resource processing method provided in this embodiment of this application can be executed by a resource processing apparatus. In this embodiment of this application, the resource processing apparatus executing the resource processing method is used as an example to describe the resource processing apparatus provided in this embodiment of this application.

As shown in FIG. 4, an embodiment of this application provides a resource processing apparatus 400 including:
a first processing module 401, configured to: in a case that a first bandwidth part BWP includes a first synchronization signal/physical broadcast channel signal block SSB, perform a first operation, where the first SSB includes a non-cell defining SSB; where
the first operation includes at least one of the following:
   determining that a first transmission resource allocated to the terminal is expected not to overlap with a transmission resource corresponding to the first SSB, or determining that the first SSB is not transmitted in a first transmission resource allocated to the terminal, where the first transmission resource is a resource for transmission of first information, and the first information includes at least one of a data signal, a control signal, and a reference signal;
   in a case that the first transmission resource overlaps with a transmission resource corresponding to a non-cell defining SSB, determining that the transmission resource corresponding to the non-cell defining SSB is not used for transmitting or receiving the first information; and
   in a case that the first transmission resource overlaps with a resource indicated by a first rate matching pattern, determining that the resource indicated by the first rate matching pattern is not used for transmitting or receiving the first information, where the resource indicated by the first rate matching module includes a transmission resource corresponding to a non-cell defining SSB.

Optionally, the non-cell defining SSB includes at least one of the following:
SSB configured by terminal-dedicated signaling;
SSB configured by BWP downlink dedicated signaling;
SSB configured by a radio resource control RRC parameter related to a non-cell defining SSB configuration; and
SSB not used to obtain a system information block SIB 1 of a current serving cell or an SSB not used to obtain an SIB1 corresponding to a PDCCH configuration of a current serving cell.

Optionally, the apparatus in this embodiment of this application further includes:
a second processing module, configured to perform a second operation after the first processing module determines that the transmission resource corresponding to the non-cell defining SSB is not used for transmitting or receiving the first information, where the second operation includes at least one of the following:
performing rate matching processing on the first information;
puncturing the first information;
dropping reception or transmission of the first information;
delaying reception or transmission of the first information;
in a case that the first information is information corresponding to a PUSCH transmission, dividing the PUSCH transmission into multiple actual PUSCH transmissions.

Optionally, the first rate matching pattern is configured using a rate matching pattern parameter or an SSB rate matching pattern parameter.

Optionally, a period indicated by the first rate matching pattern includes period information of the first SSB.

Optionally, the apparatus in this embodiment of this application further includes:
an obtaining module, configured to obtain a first parameter, where the first parameter is used to indicate the maximum number of rate matching patterns supported after extension, a value of the first parameter being greater than a first value and less than or equal to a second value; where
the first value is the maximum number of rate matching patterns supported before extension, and the second value is agreed by a protocol or determined based on a capability of the terminal.

Optionally, the first information includes at least one of the following:
a data signal transmitted in a physical downlink shared channel PDSCH;
a control signal transmitted in a physical downlink control channel PDCCH;
a data signal transmitted in a physical uplink shared channel PUSCH;
a control signal transmitted in a physical uplink control channel PUCCH; and
a sounding reference signal.

In this embodiment of this application, in a case that the first bandwidth part BWP includes the non-cell defining SSB, the terminal performs the first operation, where the first operation includes at least one of the following: determining that the first transmission resource allocated to the terminal is expected not to overlap with the transmission resource corresponding to the non-cell defining SSB; in a case that the first transmission resource overlaps with the transmission resource corresponding to the non-cell defining SSB, determining that the transmission resource corresponding to the non-cell defining SSB is not used for transmitting or receiving the first information; and in a case that the first transmission resource overlaps with the resource indicated by the first rate matching pattern, determining that the resource indicated by the first rate matching pattern is not used for transmitting or receiving the first information, where the resource indicated by the first rate matching module includes the transmission resource corresponding to the non-cell defining SSB. In this way, performing the first operation achieves the objective of performing rate matching for the first transmission resource based on the non-cell defining SSB, thereby effectively ensuring the scheduling of the first information by the network.

The resource processing apparatus in this embodiment of this application may be an electronic device, for example, an electronic device having an operating system, or may be a component of an electronic device, for example, an integrated circuit or a chip. The electronic device may be a terminal or other devices than terminals. For example, the terminal may include but is not limited to the types of the terminal 11 listed above, and the other devices may be servers, network attached storage (Network Attached Storage, NAS), or the like, which are not specifically limited in the embodiments of this application.

The resource processing apparatus provided in this embodiment of this application is capable of implementing the processes implemented in the method embodiments of FIG. 2 and FIG. 3, with the same technical effects achieved. To avoid repetition, details are not described herein again.

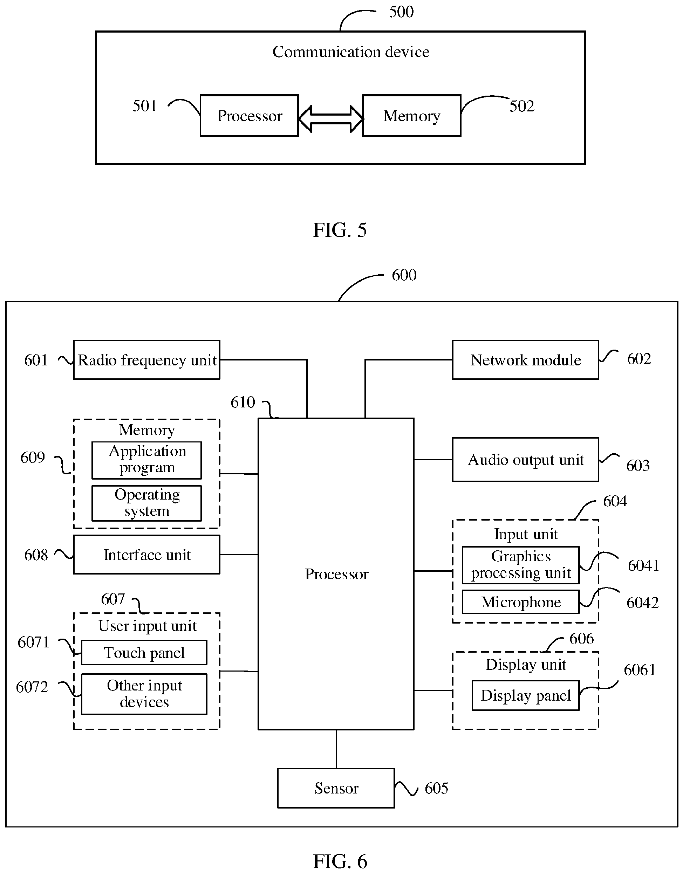

Optionally, as shown in FIG. 5, an embodiment of this application further provides a communication device 500 including a processor 501 and a memory 502. The memory 502 stores a program or instruction capable of running on the processor 501. For example, in a case that the communication device 500 is a terminal, when the program or the instruction is executed by the processor 501, the steps of the foregoing embodiments of the resource processing method are implemented, with the same technical effects achieved. To avoid repetition, details are not described herein again.

An embodiment of this application further provides a terminal including a processor and a communication interface. The processor is configured to: in a case that a first bandwidth part BWP includes a first synchronization signal/physical broadcast channel signal block SSB, perform a first operation, where the first SSB includes a non-cell defining SSB; where
the first operation includes at least one of the following:
determining that a first transmission resource allocated to the terminal is expected not to overlap with a transmission resource corresponding to the first SSB, or determining that the first SSB is not transmitted in a first transmission resource allocated to the terminal, where the first transmission resource is a resource for transmission of first information, and the first information includes at least one of a data signal, a control signal, and a reference signal;
in a case that the first transmission resource overlaps with a transmission resource corresponding to a non-cell defining SSB, determining that the transmission resource corresponding to the non-cell defining SSB is not used for transmitting or receiving the first information; and
in a case that the first transmission resource overlaps with a resource indicated by a first rate matching pattern, determining that the resource indicated by the first rate matching pattern is not used for transmitting or receiving the first information, where the resource indicated by the first rate matching module includes a transmission resource corresponding to a non-cell defining SSB. This terminal embodiment corresponds to the foregoing method embodiment on the terminal side. All processes and implementations in the foregoing method embodiment are applicable to this terminal embodiment, with the same technical effects achieved. Specifically, FIG. 6 is a schematic diagram of a hardware structure of a terminal implementing the embodiments of this application.

The terminal 600 includes but is not limited to at least part of these components: a radio frequency unit 601, a network module 602, an audio output unit 603, an input unit 604, a sensor 605, a display unit 606, a user input unit 607, an interface unit 608, a memory 609, a processor 610, and the like.

Persons skilled in the art can understand that the terminal 600 may further include a power supply (for example, a battery) supplying power to the components, and the power supply may be logically connected to the processor 610 through a power management system. In this way, functions such as charge management, discharge management, and power consumption management are implemented by using the power management system. The structure of the terminal shown in FIG. 6 does not constitute any limitation on the terminal, and the terminal may include more or fewer components than shown in the figure, or combine some of the components, or have different arrangements of the components. Details are not described herein.

It can be understood that in this embodiment of this application, the input unit 604 may include a graphics processing unit (Graphics Processing Unit, GPU) 6041 and a microphone 6042. The graphics processing unit 6041 processes image data of a still picture or video obtained by an image capture apparatus (for example, a camera) in a video capture mode or an image capture mode. The display unit 606 may include a display panel 6061, and the display panel 6061 may be configured in a form of a liquid crystal display, an organic light-emitting diode, and the like. The user input unit 607 includes at least one of a touch panel 6071 and other input devices 6072. The touch panel 6071 is also referred to as a touchscreen. The touch panel 6071 may include two parts: a touch detection apparatus and a touch controller. The other input devices 6072 may include but are not limited to a physical keyboard, a function key (for example, a volume control key or a power on/off key), a trackball, a mouse, a joystick, and the like. Details are not described herein.

In this embodiment of this application, the radio frequency unit 601 receives downlink data from a network-side device and sends the data to the processor 610 for processing; and the radio frequency unit 601 can additionally send uplink data to the network-side device. Generally, the radio frequency unit 601 includes but is not limited to an antenna, an amplifier, a transceiver, a coupler, a low noise amplifier, and a duplexer.

The memory 609 may be configured to store software programs or instructions and various data. The memory 609 may include a first storage area for storing programs or instructions and a second storage area for storing data. The first storage area may store an operating system, an application program or instruction required by at least one function (for example, a sound playback function or an image playback function), and the like. Additionally, the memory 609 may be a volatile memory or a non-volatile memory, or the memory 609 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 609 in the embodiments of this application includes but is not limited to these or any other applicable types of memories.

The processor 610 may include one or more processing units. Optionally, the processor 610 may integrate an application processor and a modem processor. The application processor primarily processes operations involving an operating system, user interface, application program, or the like. The modem processor primarily processes radio communication signals, for example, being a baseband processor. It can be understood that the modem processor may alternatively be not integrated in the processor 610.

The processor 610 is configured to: in a case that a first bandwidth part BWP includes a first synchronization signal/physical broadcast channel signal block SSB, perform a first operation, where the first SSB includes a non-cell defining SSB; where
the first operation includes at least one of the following:
determining that a first transmission resource allocated to the terminal is expected not to overlap with a transmission resource corresponding to the first SSB, or determining that the first SSB is not transmitted in a first transmission resource allocated to the terminal, where the first transmission resource is a resource for transmission of first information, and the first information includes at least one of a data signal, a control signal, and a reference signal;
in a case that the first transmission resource overlaps with a transmission resource corresponding to a non-cell defining SSB, determining that the transmission resource corresponding to the non-cell defining SSB is not used for transmitting or receiving the first information; and
in a case that the first transmission resource overlaps with a resource indicated by a first rate matching pattern, determining that the resource indicated by the first rate matching pattern is not used for transmitting or receiving the first information, where the resource indicated by the first rate matching module includes a transmission resource corresponding to a non-cell defining SSB.

In this embodiment of this application, in a case that the first bandwidth part BWP includes the non-cell defining SSB, the terminal performs the first operation, where the first operation includes at least one of the following: determining that the first transmission resource allocated to the terminal is expected not to overlap with the transmission resource corresponding to the non-cell defining SSB; in a case that the first transmission resource overlaps with the transmission resource corresponding to the non-cell defining SSB, determining that the transmission resource corresponding to the non-cell defining SSB is not used for transmitting or receiving the first information; and in a case that the first transmission resource overlaps with the resource indicated by the first rate matching pattern, determining that the resource indicated by the first rate matching pattern is not used for transmitting or receiving the first information, where the resource indicated by the first rate matching module includes the transmission resource corresponding to the non-cell defining SSB. In this way, performing the first operation achieves the objective of performing rate matching for the first transmission resource based on the non-cell defining SSB, thereby effectively ensuring the scheduling of the first information by the network.

Optionally, the non-cell defining SSB includes at least one of the following:
SSB configured by terminal-dedicated signaling;
SSB configured by BWP downlink dedicated signaling;
SSB configured by a radio resource control RRC parameter related to a non-cell defining SSB configuration; and
SSB not used to obtain a system information block SIB 1 of a current serving cell or an SSB not used to obtain an SIB1 corresponding to a PDCCH configuration of a current serving cell.

Optionally, the processor 610 is further configured to perform, by the terminal, a second operation, where the second operation includes at least one of the following:
performing rate matching processing on the first information;
puncturing the first information;
dropping reception or transmission of the first information;
delaying reception or transmission of the first information;
in a case that the first information is information corresponding to a PUSCH transmission, dividing the PUSCH transmission into multiple actual PUSCH transmissions.

Optionally, the first rate matching pattern is configured using a rate matching pattern parameter or an SSB rate matching pattern parameter.

Optionally, a period indicated by the first rate matching pattern includes period information of the first SSB.

Optionally, the radio frequency unit 601 is further configured to:
obtain a first parameter, where the first parameter is used to indicate the maximum number of rate matching patterns supported after extension, a value of the first parameter being greater than a first value and less than or equal to a second value; where
the first value is the maximum number of rate matching patterns supported before extension, and the second value is agreed by a protocol or determined based on a capability of the terminal.

Optionally, the first information includes at least one of the following:
a data signal transmitted in a physical downlink shared channel PDSCH;
a control signal transmitted in a physical downlink control channel PDCCH;
a data signal transmitted in a physical uplink shared channel PUSCH;
a control signal transmitted in a physical uplink control channel PUCCH; and
a sounding reference signal.

In this embodiment of this application, in a case that the first bandwidth part BWP includes the non-cell defining SSB, the terminal performs the first operation, where the first operation includes at least one of the following: determining that the first transmission resource allocated to the terminal is expected not to overlap with the transmission resource corresponding to the non-cell defining SSB; in a case that the first transmission resource overlaps with the transmission resource corresponding to the non-cell defining SSB, determining that the transmission resource corresponding to the non-cell defining SSB is not used for transmitting or receiving the first information; and in a case that the first transmission resource overlaps with the resource indicated by the first rate matching pattern, determining that the resource indicated by the first rate matching pattern is not used for transmitting or receiving the first information, where the resource indicated by the first rate matching module includes the transmission resource corresponding to the non-cell defining SSB. In this way, performing the first operation achieves the objective of performing rate matching for the first transmission resource based on the non-cell defining SSB, thereby effectively ensuring the scheduling of the first information by the network.

An embodiment of this application further provides a readable storage medium. The readable storage medium stores a program or instruction. When the program or instruction is executed by a processor, the processes of the foregoing embodiments of the resource processing method are implemented, with the same technical effects achieved. To avoid repetition, details are not described herein again.

The processor is a processor in the terminal described in the foregoing embodiment. The readable storage medium includes a computer-readable storage medium such as a computer read-only memory ROM, a random access memory RAM, a magnetic disk, or an optical disc.

An embodiment of this application further provides a chip. The chip includes a processor and a communication interface. The communication interface is coupled to the processor. The processor is configured to run a program or instruction to implement the processes of the foregoing embodiments of the resource processing method, with the same technical effects achieved. To avoid repetition, details are not described herein again.

It should be understood that the chip mentioned in this embodiment of this application may also be referred to as a system-on-chip, a system chip, a system-on-a-chip, or a system on a chip, or the like.

An embodiment of this application further provides a computer program/program product, where the computer program/program product is stored in a storage medium, and the computer program/program product is executed by at least one processor to implement the processes of the foregoing embodiments of the resource processing method, with the same technical effects achieved. To avoid repetition, details are not described herein again.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

By means of the foregoing description of the implementations, persons skilled in the art may clearly understand that the method in the foregoing embodiment may be implemented by software with a necessary general hardware platform. Certainly, the method in the foregoing embodiment may also be implemented by hardware. However, in many cases, the former is a preferred implementation. Based on such an understanding, the technical solutions of this application essentially, or the part contributing to the prior art may be implemented in a form of a computer software product. The computer software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the method described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. A resource processing method, comprising:
in a case that a first bandwidth part BWP comprises a first synchronization signal/physical broadcast channel signal block SSB, performing, by a terminal, a first operation, wherein the first SSB comprises a non-cell defining SSB; wherein
the first operation comprises at least one of the following:
determining that a first transmission resource allocated to the terminal is expected not to overlap with a transmission resource corresponding to the first SSB, or determining that the first SSB is not transmitted in a first transmission resource allocated to the terminal, wherein the first transmission resource is a resource for transmission of first information, and the first information comprises at least one of a data signal, a control signal, and a reference signal;
in a case that the first transmission resource overlaps with a transmission resource corresponding to a non-cell defining SSB, determining that the transmission resource corresponding to the non-cell defining SSB is not used for transmitting or receiving the first information; and
in a case that the first transmission resource overlaps with a resource indicated by a first rate matching pattern, determining that the resource indicated by the first rate matching pattern is not used for transmitting or receiving the first information, wherein the resource indicated by the first rate matching module comprises at least a transmission resource corresponding to a non-cell defining SSB.

2. The method according to claim 1, wherein the non-cell defining SSB comprises at least one of the following:
SSB configured by terminal-dedicated signaling;
SSB configured by BWP downlink dedicated signaling;
SSB configured by a radio resource control RRC parameter related to a non-cell defining SSB configuration; and
SSB not used to obtain a system information block SIB 1 of a current serving cell or an SSB not used to obtain an SIB1 corresponding to a PDCCH configuration of a current serving cell.

3. The method according to claim 1 or 2, after the determining that the transmission resource corresponding to the non-cell defining SSB is not used for transmitting or receiving the first information, further comprising:
performing, by the terminal, a second operation, wherein the second operation comprises at least one of the following:
performing rate matching processing on the first information;
puncturing the first information;
dropping reception or transmission of the first information;
delaying reception or transmission of the first information;
in a case that the first information is information corresponding to a PUSCH transmission, dividing the PUSCH transmission into multiple actual PUSCH transmissions.

4. The method according to claim 1, wherein the first rate matching pattern is configured using a rate matching pattern parameter or an SSB rate matching pattern parameter.

5. The method according to claim 1, wherein a period indicated by the first rate matching pattern comprises period information of the first SSB.

6. The method according to any one of claims 1 to 4, further comprising:
obtaining a first parameter, wherein the first parameter is used to indicate the maximum number of rate matching patterns supported after extension, a value of the first parameter being greater than a first value and less than or equal to a second value; wherein
the first value is the maximum number of rate matching patterns supported before extension, and the second value is agreed by a protocol or determined based on a capability of the terminal.

7. The method according to claim 1, wherein the first information comprises at least one of the following:
a data signal transmitted in a physical downlink shared channel PDSCH;
a control signal transmitted in a physical downlink control channel PDCCH;
a data signal transmitted in a physical uplink shared channel PUSCH;
a control signal transmitted in a physical uplink control channel PUCCH; and
a sounding reference signal.

8. A resource processing apparatus, comprising:
a first processing module, configured to: in a case that a first bandwidth part BWP comprises a first synchronization signal/physical broadcast channel signal block SSB, perform a first operation, wherein the first SSB comprises a non-cell defining SSB; wherein
the first operation comprises at least one of the following:
determining that a first transmission resource allocated to the terminal is expected not to overlap with a transmission resource corresponding to the first SSB, or determining that the first SSB is not transmitted in a first transmission resource allocated to the terminal, wherein the first transmission resource is a resource for transmission of first information, and the first information comprises at least one of a data signal, a control signal, and a reference signal;
in a case that the first transmission resource overlaps with a transmission resource corresponding to a non-cell defining SSB, determining that the transmission resource corresponding to the non-cell defining SSB is not used for transmitting or receiving the first information; and
in a case that the first transmission resource overlaps with a resource indicated by a first rate matching pattern, determining that the resource indicated by the first rate matching pattern is not used for transmitting or receiving the first information, wherein the resource indicated by the first rate matching module comprises a transmission resource corresponding to a non-cell defining SSB.

9. The apparatus according to claim 8, wherein the non-cell defining SSB comprises at least one of the following:
SSB configured by terminal-dedicated signaling;
SSB configured by BWP downlink dedicated signaling;
SSB configured by a radio resource control RRC parameter related to a non-cell defining SSB configuration; and
SSB not used to obtain a system information block SIB 1 of a current serving cell or an SSB not used to obtain an SIB1 corresponding to a PDCCH configuration of a current serving cell.

10. The apparatus according to claim 8 or 9, further comprising:
a second processing module, configured to perform a second operation after the first processing module determines that the transmission resource corresponding to the non-cell defining SSB is not used for transmitting or receiving the first information, wherein the second operation comprises at least one of the following:
performing rate matching processing on the first information;
puncturing the first information;
dropping reception or transmission of the first information;
delaying reception or transmission of the first information;
in a case that the first information is information corresponding to a PUSCH transmission, dividing the PUSCH transmission into multiple actual PUSCH transmissions.

11. The apparatus according to claim 8, wherein the first rate matching pattern is configured using a rate matching pattern parameter or an SSB rate matching pattern parameter.

12. The apparatus according to claim 8, wherein a period indicated by the first rate matching pattern comprises period information of the first SSB.

13. The apparatus according to any one of claims 8 to 11, further comprising:
an obtaining module, configured to obtain a first parameter, wherein the first parameter is used to indicate the maximum number of rate matching patterns supported after extension, a value of the first parameter being greater than a first value and less than or equal to a second value; wherein
the first value is the maximum number of rate matching patterns supported before extension, and the second value is agreed by a protocol or determined based on a capability of the terminal.

14. The apparatus according to claim 8, wherein the first information comprises at least one of the following:
a data signal transmitted in a physical downlink shared channel PDSCH;
a control signal transmitted in a physical downlink control channel PDCCH;
a data signal transmitted in a physical uplink shared channel PUSCH;
a control signal transmitted in a physical uplink control channel PUCCH; and
a sounding reference signal.

15. A terminal, comprising a processor and a memory, wherein the memory stores a program or instruction capable of running on the processor, and when the program or instruction is executed by the processor, the steps of the resource processing method according to any one of claims 1 to 7 are implemented.

16. A readable storage medium, wherein the readable storage medium stores a program or instruction, and when the program or instruction is executed by a processor, the steps of the resource processing method according to any one of claims 1 to 7 are implemented.

17. A chip, comprising a processor and a communication interface, wherein the communication interface is coupled to the processor, and the processor is configured to run a program or instruction so as to implement the steps of the resource processing method according to any one of claims 1 to 7.

18. A computer program product, wherein the computer program product is stored in a non-transient storage medium, and the computer program product is executed by at least one processor so as to implement the steps of the resource processing method according to any one of claims 1 to 7.

19. An electronic device configured to perform the steps of the resource processing method according to any one of claims 1 to 7.
